# EUROPEAN PATENT APPLICATION

(11) **EP 1 413 392 A1**
(43) Date of publication of application: **28.04.2004**
(21) Application number: 03023495.9
(22) Date of filing: 18.10.2003
(51) Int. Cl.: B23Q 3/155, B23Q 11/08, B23Q 3/157, B23Q 1/62

(54) **Operating unit for mechanical treatments with chip removal**

(30) Priority: 25.10.2002 IT vi20020231
(71) Applicant: SISTECH S.R.L., 36075 Montecchio Maggiore (Vicenza) (IT)
(72) Inventor: Nardon, Pierangelo, 36075 Montecchio Maggiore (Vicenza) (IT)
(74) Representative: Bettello, Pietro, Dott. Ing.

(57) **Abstract**

The finding concerns an operating unit for mechanical treatments with chip removal, intended to be mounted on individual machine tools or inserted on complex mechanical treatment plants, for the production of pieces of all different types. Said unit is characterised in that it is equipped with a chuck, a tool-changer and a tool store; such components are all mounted on a single support structure which moves on the three axes "X,Y,Z" (Fig. 1).

## Description

The present finding concerns an operating unit intended to be used on individual machine tools or inserted on complex mechanical treatment plants with chip removal, for the production of pieces of all different types.

In the current state of the art there are numerous types of operating units, with three of more axes (work centre, FMS, etc.) as well as complex plants, of the rotary table transfer type or of the online transfer type which simultaneously use many operating units; all of these units and these plants require a so-called "tool-change device".

Known productive solutions have some operating drawbacks, which limit the functionality and therefore the overall productivity of the individual machine tool or of the plant; in particular:
- the number of operations or the number of tools used on each individual operating unit is predefined and usually comprises a few available tools;
- the steps foreseen to carry out the tool-change operation imply the displacement of the chuck in a specific zone of the operating machine, often referred to as a tool-changer. Such a way of operating disadvantageously involves, as well as an increase in the time required to complete the entire tool change cycle, also the impossibility of repositioning the chuck with total precision after each tool change operation since it must, with each replacement of the tool, displace from the work position to the tool change position and vice-versa and this involves a movement of mechanical members which, for their nature, always operate within the tolerances which, even if of a small absolute value, added together, compromise the result of the operation, i.e. that of taking the chuck back into the exact initial work position;
- the tool change device, besides the normal rotary movement, must carry out rectilinear and/or curvilinear translations (shuttle), for which reason it is necessary for the zone in front of the chuck to be sufficiently large, such as to allow the removal of the tool holders from the housing cone. If the configuration of the operating unit does not allow such a bulk zone to be formed, a limitation in the length of the tools and/or a reduction in the maximum possible size of the piece being treated is derived;
- the constructive solutions which foresee that it has to be the chuck that carries out the entire sequence of the tool change operations, going to pick up and/or deposit the tool in the store, usually of the fixed rack type, display the drawback of quite a long stop time of the work cycle, waiting for the replacement of the tool; in particular, in the case in which the tool to be used is located in the store, in a position not immediately adjacent to the work position of the chuck itself;
- the constructive solutions which foresee that it must be the store (of the rotary linear or circular rack type) that carries out the tool change operation display the drawbacks of a substantial length of the tool change cycle, the impossibility of having many tools and the need for substantial space to contain the bulk required by the store in movement.
- The constructive solutions which use the main head as a tool store, so-called "with a revolver turret", where instead of the pincers of the tool rotary chucks are mounted which, individually and in succession, after they have been positioned in the work station, are placed in rotation to be able to carry out the relative operation, are rarely used due to the high realisation costs and the limited number of tools which can be provided for each operating unit.

The purpose of the present finding is that of foreseeing an operating unit for mechanical treatments with chip removal which lacks the drawbacks displayed in similar machines of the known type.

Such a purpose is accomplished with the realisation of an operating unit for mechanical treatments with chip removal which is equipped with a chuck, tool changer and tool store, all mounted on a single support structure, which moves on the three axes "X-Y-Z".

Operatively, the operating unit according to the finding operates with a sequence of movements by means of which the following operating results are obtained:
- at the end of each mechanical treatment it is possible to replace the tool without having to carry out displacements of the chuck on the axes "X-Y" but only the moving back thereof on its axis "Z", which ensures the maximum precision in subsequent coaxial operations, since no displacement takes place on the axes perpendicular to the work axis "Z";
- the tool change step can take place in whatever position of the chuck with respect to "X-Y", since it is not necessary to foresee a space in front of the tool itself for its removal from the seat of the chuck; advantageously, the only bulk which must be present is that which is necessary to allow the rotation given to the pair of tools in replacement by the gripping device, also known as rotary arm.
- the rotary arm exclusively has the function of locking the two tools being exchanged through two pincers and changing their position from the chuck to the store and vice-versa, through a single rotary movement of 180°.
- the removal of the tool from the chuck is realised with the sliding back on the axis "Z" of the chuck with respect to the fixed position of the rotary arm, that is it operates according to an innovative principle, with respect to the way of operating of similar known machines, which foresees holding the tool still and moving its support.
- the positioning of the new tool on the pincer of the rotary arm is obtained through a rectilinear translational movement of the tool-holding store towards the pincer itself.

In detail, after the store, with its rectilinear displacement, has reached the pick-up position, the two pincers of the rotary arm simultaneously lock, respectively, the tool in the store and the tool in the chuck; then, both the chuck and the tool store move back simultaneously on the axis "Z" to allow the rotation by 180° of the rotary arm and therefore to exchange the position of the two pools being held; then, again simultaneously, both the store and the chuck advance in the opposite direction, in direction "Z", so as to lock on to the respective new tools.

All of the sequence of selection operations of the new tool takes place, advantageously, in a so-called masked time, i.e. whilst the operating unit is working.

Constructively, the operating unit according to the finding comprises a truck, able to slide on the axes "X-Y" which supports the chuck which can slide on the work axis "Z" and a tool store, integral with the aforementioned truck and equipped with independent translational movement, parallel to the axis "Z", which allows the tool that is to be replaced to be taken into a position which allows it to be gripped by a group of two pincers or rotary arm applied to the truck itself.

The finding is completed with the application of protective elements which ensure the insulation of the rear part of the operating units from flying chips, cooling liquid and other, coming from the work zone, said protective elements also being able to slide linearly and/or able to be wound, to allow the free movement on the three axes of the unit and to allow the tools to be picked up and replaced from the chuck and vice-versa.

The finding shall become clearer through the description of a possible embodiment thereof, given only as an illustrative example, with the help of the attached tables of drawings, where:
- fig. 1 (Table I) represents a front elevated view of the operating unit according to the finding;
- figs. 2 and 3 (Tables II-III) respectively represent side views, both right and left, of the operating unit according to fig. 1;
- fig. 4 (Table IV) represents a rear view of the operating unit according to fig. 1;
- figs. 5 to 12 (Tables V-VI) represent the steps, in succession, of the tool change operation, carried out with the operating unit according to the finding;

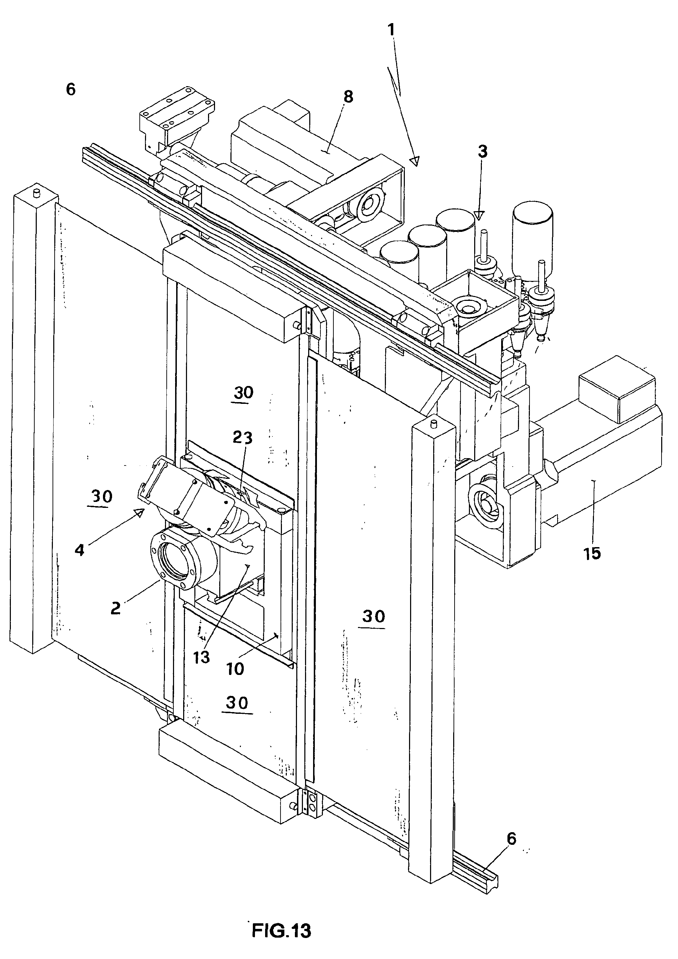

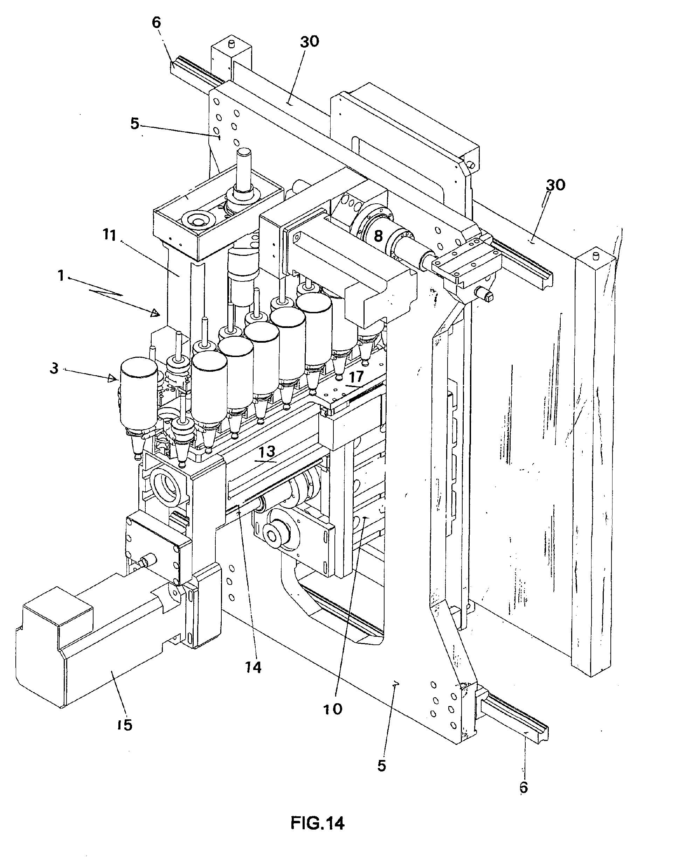

- figs. 13 and 14 (Tables VII-VIII) respectively represent two perspective views, front and rear, of the operating unit according to the finding.

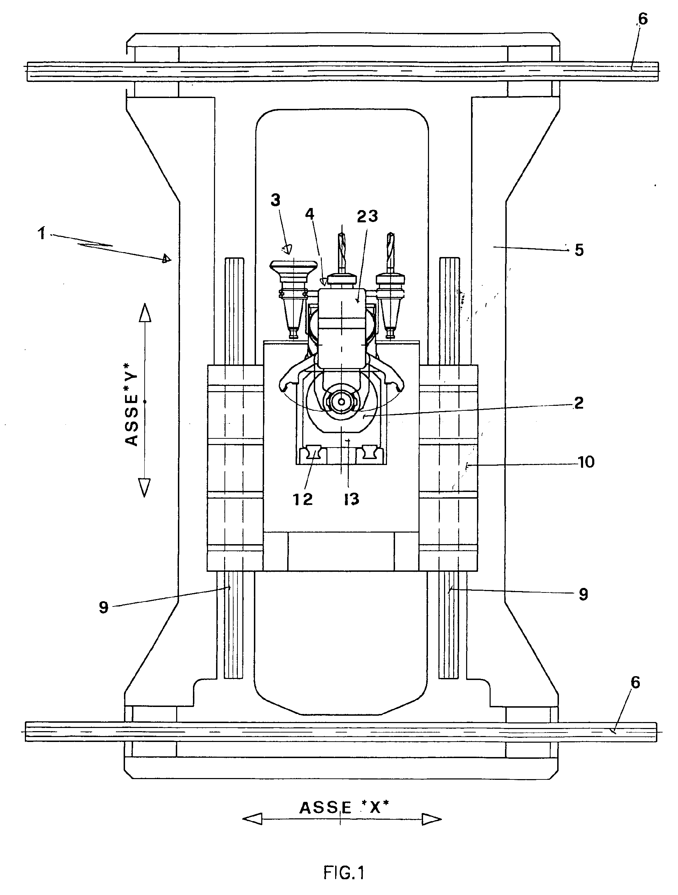

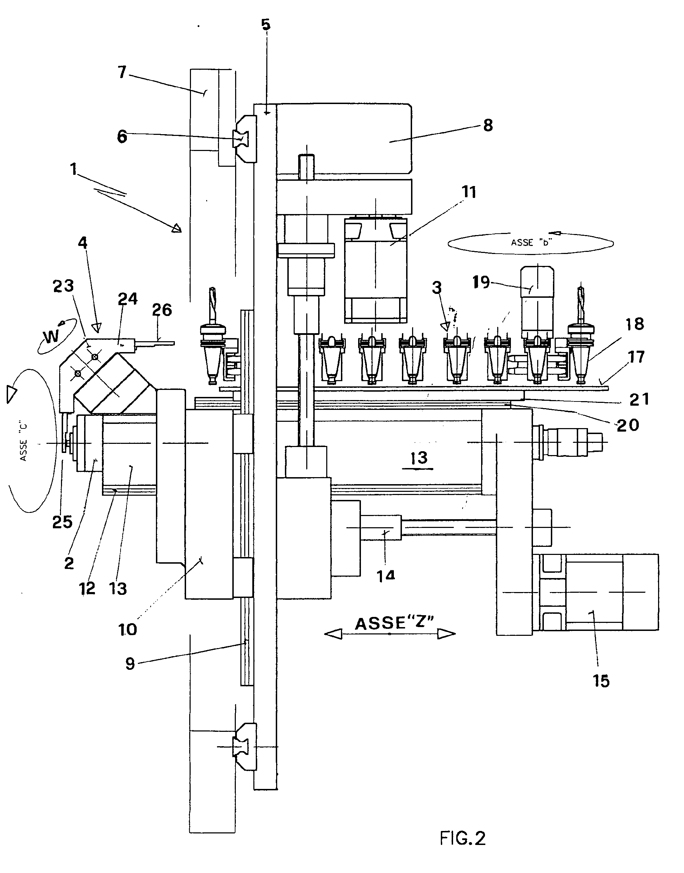

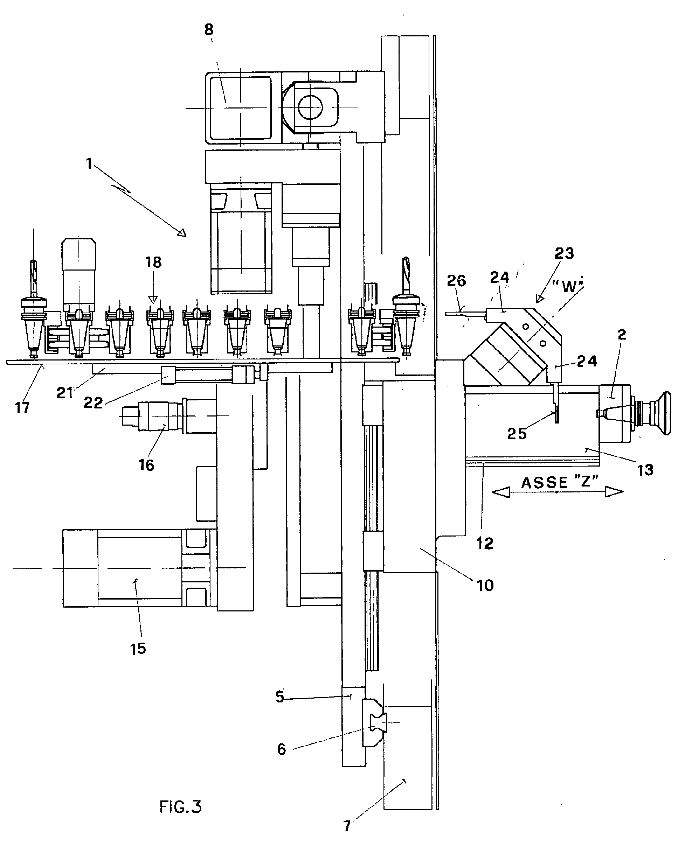

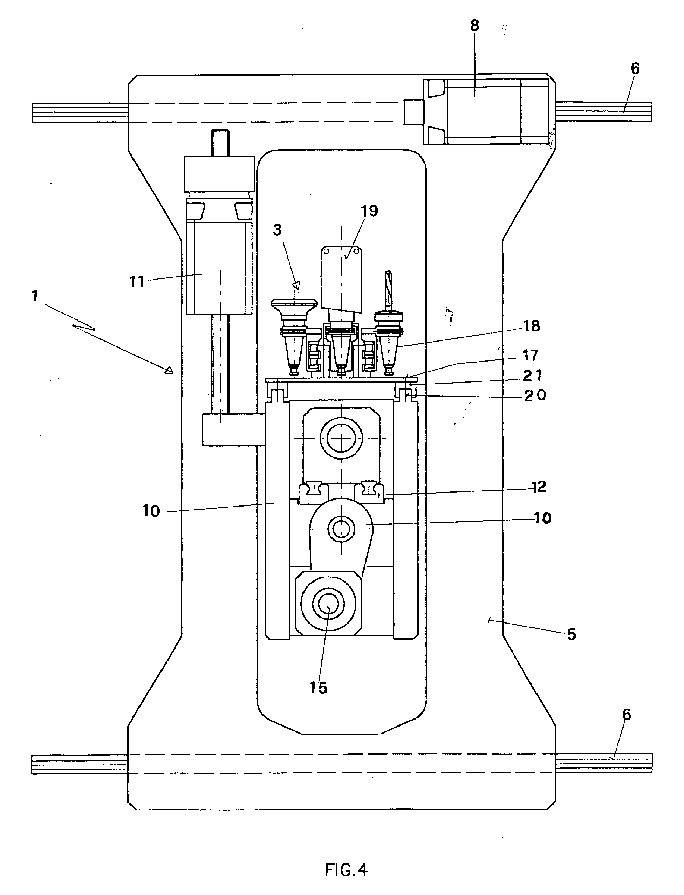

As can be seen in figs. 1-4, the operating unit according to the finding substantially consists of a truck, wholly indicated with reference numeral 1, which supports the chuck 2, the tool store 3 and the tool change group 4, said truck being susceptible to moving along the three perpendicular directions "X-Y-Z".

Constructively, the truck 1 is made up of a vertical plate 5, which can slide on horizontal guides 6, applied to the structure 7 of the machine tool, operated by the transmission group 8, to make the operating unit displace in the horizontal direction "X".

The plate 5 is equipped, on its front wall, with vertical guides 9 on which the support 10 slides, operated by the transmission group 11, to make the operating unit displace in the vertical direction "Y".

The support 10 is equipped with horizontal guides 12, which allow the sliding of the chuck-holding container 13, operated by the transmission member 14, to make the chuck itself displace in the direction of the work axis "Z".

The motor 15 for the rotation of the chuck and the ducts, of which rotary joints 16 are visible, for the cooling water of the tool and for the air which is blown upon the chuck cone, during the tool change step, to ensure the cleanliness and the precision of the chuck/tool coupling are applied onto the container 13.

A further novelty characteristic of the finding consists of foreseeing that the tool store 3 be applied, through the plate 17, above the support 10 and that the entire group of the pincers for housing tools 18, made to rotate through the motor 19 be susceptible to sliding on the guides 20, applied to the base 21 of said group, operated by the piston 22, in the direction parallel to the axis "Z" (see arrow K).

A further novelty characteristic of the finding concerns the configuration of the tool change group 4, rigidly applied to the front part of the support 10 and at the position of total re-entry of the chuck 2.

Said tool change group is made up of a body or rotary arm, wholly indicated with 23, which rotates about an axis "W", tilted by 45° on the vertical plane passing through the work axis "Z" and is equipped with two arms 24, angularly spaced apart by 90°, each equipped with a pincer, 25 and 26 respectively, for the locking of the tools to be replaced.

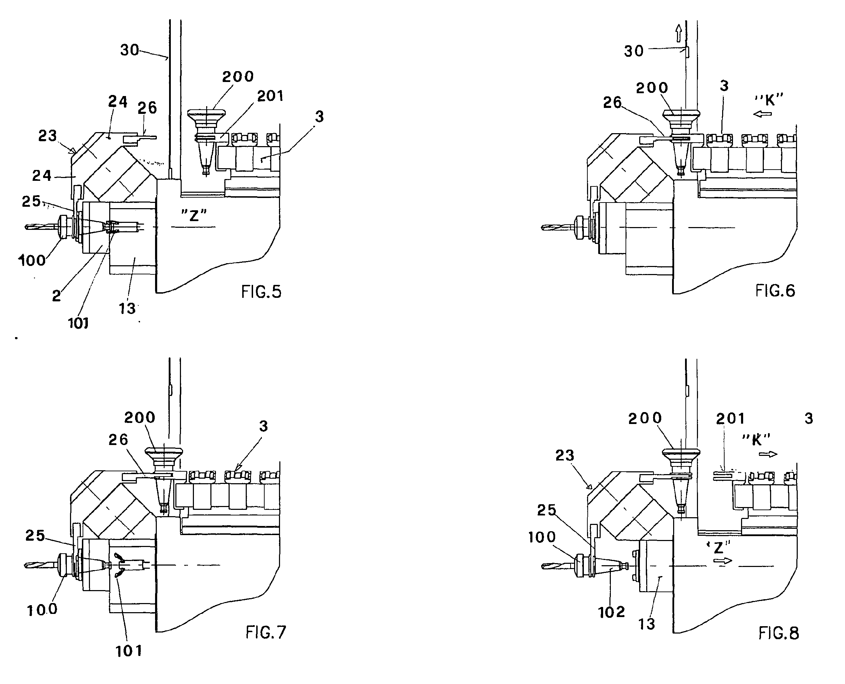

The way of operating of the unit described above and which constitutes a further novelty characteristic of the finding, is represented in the successive work steps, illustrated in figures 5 to 12.

As can be seen in fig. 5, in the starting condition of the work cycle for the tool change, the tool 100 to be replaced, locked, through the pincer 101 for locking the shank, to the chuck 2, completely re-enters on the axis "Z", so as to position its holding throat at the pincer 25, which is open, of the rotary arm 23, whereas the new tool 200 is arranged on the tool store 3, supported by the tool-holding pincer 201, waiting to be picked up by the pincer 26, now open, of the rotary arm itself.

Still in this first step the windable protective element 30 still remains closed.

Then, as can be seen in fig. 6, the windable protective element 30 opens and the tool store 3, operated by the piston 22, carries out a translation in the direction "K", positioning the new tool 200, to be used in the replacement, at the pincer 26, which is open.

Then, as can be seen in fig. 7, both of the pincers 25 and 26 of the rotary arm 23 simultaneously close on the tools to be changed, 100 and 200 respectively (arranged on the chuck and on the store), whereas, vice-versa, the pincer 101 for locking the shank of the tool inside the chuck opens.

Then, as can be seen in fig. 8, the tool 200 is removed from the tool-holding pincer 201, as a consequence of the return movement of the tool store 3, along the axis "K" in the disengaged position, at the same time as the moving back of the container 13, along the axis "Z", which completely pulls out the chuck from the shank 102 of the tool 100 being gripped with the pincer 25.

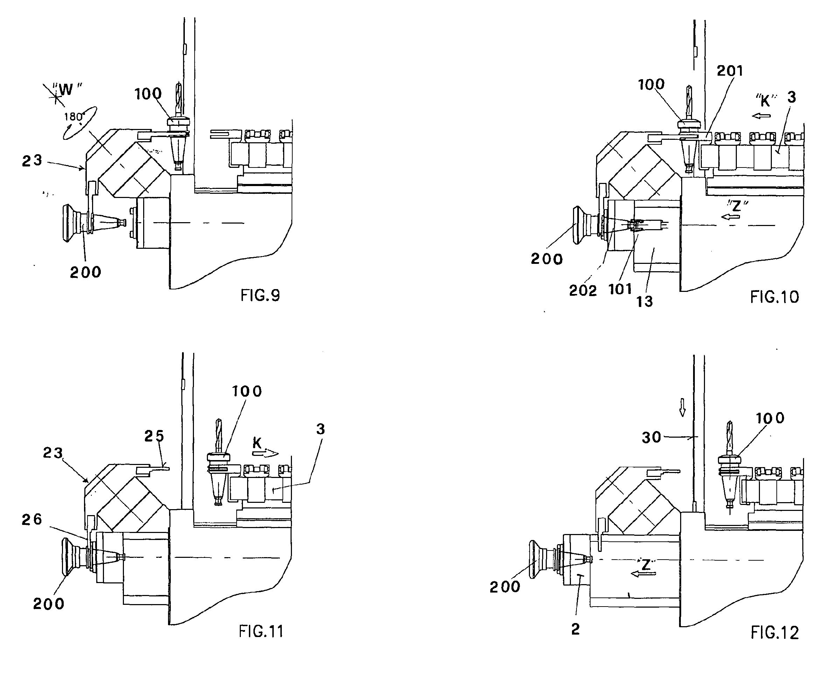

Then, as can be seen in fig. 9, the rotary arm 23 carries out a rotation of 180° on the tilted axis "W", mutually exchanging the position of the two tools 100 and 200.

Then, as can be seen in fig. 10, the tool-holding store 3 advances in "K" to allow the tool-holding pincer 201 to grip the tool 100 and at the same time the chuck-holding container also advances to allow, with the closing of the pincer 101, the locking to the shank 202 of the tool 200, in the new position.

Then, as can be seen in fig. 11, the pincers 25 and 26 of the rotary arm 23 open, freeing the two tools 100 and 200 to allow the re-entry of the tool-holding store 3 into the disengaged position.

Then, as can be seen in fig. 12, the closing of the windable protective element 30 and, at the same time, the advance of the chuck 2 along the axis "Z", which positions itself in the work zone, takes place.

From the above the numerous advantages of use of the operating unit according to the finding are clear, in particular:
- very short intervention time for tool change;
- possibility of using the operating unit even with the work axis "Z" arranged in the vertical direction;
- possibility of using the operating unit arranged upside down with respect to the axis "Z", i.e. with a tool store which goes in the zone below the aforementioned axis.

Of course, embodiments which are different to the one described are possible, in relation to the type of machine tool equipped with the operating unit according to the finding or in relation to the type and size of the tool store, without, for this reason, departing from the scope of the claims defined hereafter.

## Claims

1. OPERATING UNIT FOR MECHANICAL TREATMENTS WITH CHIP REMOVAL intended to be mounted on individual machine tools or inserted on complex mechanical treatment plants, for the production of pieces of all different types,
said operating unit being **characterised in that**
it is equipped with a chuck, a tool-changer and a tool store, said components all being mounted on a single support structure which move on the three axes (X-Y-Z).

2. OPERATING UNIT according to claim 1, **characterised in that** at the end of each mechanical treatment it is possible to replace the tool without having to carry out displacements of the chuck on the axes (X-Y) but only the moving back thereof on its axis (Z).

3. OPERATING UNIT according to claim 2, **characterised in that** the tool change step can take place in whatever position of the chuck with respect to the axes (X-Y).

4. OPERATING UNIT according to claim 3, **characterised in that** the tool change device, also known as rotary arm, has the function of locking the two tools being exchanged through two pincers and exchanging their position from the chuck to the store and vice-versa, through a single rotary movement of 180°.

5. OPERATING UNIT according to claim 4, **characterised in that** the removal of the tool from the chuck is realised with the moving back on the axis (Z) of the chuck with respect to the fixed position of the rotary arm, that is it operates according to the principle of holding the tool still axially and moving its support (chuck).

6. OPERATING UNIT according to claim 5, **characterised in that** it comprises a truck, able to slide on the axes (X-Y) which supports the chuck which can slide on the work axis (Z) and a tool store, integral with the aforementioned truck and equipped with independent translational movement, parallel to the axis (Z), which allows the tool that is to be replaced to be taken into a position which allows it to be gripped by one of the two pincers of the rotary arm applied to the truck itself.

7. OPERATING UNIT according to claim 6, **characterised in that** it foresees the application of protective elements which ensure the insulation of the rear part of the operating units from flying chips, cooling liquid and other, coming from the work zone, said protective elements also being able to slide linearly and/or able to be wound, to allow the free movement on the three axes of the unit and to allow the tools to be picked up and replaced from the tool store to the chuck and vice-versa.

8. OPERATING UNIT according to claim 7, **characterised in that** the positioning of the new tool on the pincer of the rotary arm is obtained through a rectilinear translational movement of the tool-holding store towards the pincer itself.

9. OPERATING UNIT according to claim 8, **characterised in that** after the store, with its rectilinear displacement, has reached the pick-up position, the two pincers of the rotary arm simultaneously lock the tool on the store and the tool on the chuck, respectively, and then both the chuck and the store simultaneously move back to allow the rotation by 180° of the rotary arm and thus to allow the position of the two tools being gripped to be exchanged.

10. OPERATING UNIT according to claim 9, **characterised in that** simultaneously both the tool store and the chuck advance in the opposite direction, in direction (Z), so as to lock the respective new tools.

11. OPERATING UNIT according to one or more of the previous claims, **characterised in that** it comprises a truck (1), which supports the chuck (2), the tool store (3) and the tool-change group (4), said truck being susceptible to moving in the three perpendicular directions (X-Y-Z).

12. OPERATING UNIT according to claim 11, **characterised in that** the truck (1) is made up of a vertical plate (5), which can slide on horizontal guides (6), applied to the structure (7) of the machine tool, operated by the transmission group (8), to make the operating unit displace in the horizontal direction (X).

13. OPERATING UNIT according to claim 12, **characterised in that** the plate (5) is equipped, on its front wall, with vertical guides (9) on which the support (10) slides, operated by the transmission group (11), to make the operating unit displace in the vertical direction (Y).

14. OPERATING UNIT according to claim 13, **characterised in that** the support (10) is equipped with horizontal guides (12), which allow the sliding of the chuck-holding container (13), operated by the transmission member (14), to make the chuck itself displace in the direction of the work axis (Z).

15. OPERATING UNIT according to claim 14, **characterised in that** the tool store (3) is applied, through the plate (17), above the support (10) and the entire group of the housing pincers (18), made to rotate through the motor (19) is susceptible to sliding on the guides (20), applied to the base (21) of said group, operated by the piston (22), in the direction (K) parallel to the work axis (Z).

16. OPERATING UNIT according to claim 15, **characterised in that** the tool change group is made up of a body or rotary arm (23), which rotates about an axis (W), tilted by 45° on the vertical plane passing through the work axis (Z) and is equipped with two arms (24), angularly spaced apart by 90°, each equipped with a pincer (25, 26), for the locking of the tools to be replaced.

17. USE OF THE OPERATING UNIT, according to one or more of the previous claims, **characterised in that** I foresees the following work steps:
- in the starting condition of the work cycle for the tool change, the tool (100) to be replaced is locked, through the pincer (101) for locking the shank, to the chuck (2), and completely re-enters on the axis (Z), so as to position its holding throat at the pincer (25), of the rotary arm (23), which is open, whereas the new tool (200) is arranged on the tool store (3), supported by the tool-holding pincer (201), waiting to be picked up by the pincer (26) of the rotary arm itself, also open, during said step the windable protective element (30) still remains closed;
- then, the windable protective element (30) opens and the tool-holding store (3), operated by the piston 22, carries out a translation in the direction (K), positioning the new tool (200), to be used in the replacement, at the pincer (26), which is open;
- then, both of the pincers (25, 26) of the rotary arm (23) simultaneously close on the tools to be changed (100, 200) (arranged on the chuck and on the store, respectively), and the pincer (101) for locking the shank of the tool opens;
- then, the tool (200) is removed from the tool-holding pincer (201), as a consequence of the return movement of the tool store (3), along the axis (K) in the disengaged position, at the same time as the moving back of the container (13), along the axis (Z), which completely pulls out the chuck (2) from the shank (102) of the tool (100) being gripped with the pincer (25);
- then, the rotary arm (23) carries out a rotation of 180° on the tilted axis (W), mutually exchanging the position of the two tools (100, 200);
- then, the tool-holding store (3) advances in direction (K) to allow the tool-holding pincer (201) to grip the tool (100) and at the same time the chuck-holding container (13) also advances with direction (Z) to allow, with the closing of the pincer (101), the locking to the shank (202) of the tool (200), in the new position;
- then, the pincers (25, 26) of the rotary arm (23) open, freeing the two tools (100, 200) to allow the re-entry of the tool-holding store (3) into the disengaged position;
- then, the closing of the windable protective element (30) and, at the same time, the advance of the chuck (2) along the axis (Z), which positions itself in the work zone, takes place.
